# EUROPEAN PATENT SPECIFICATION

(11) **EP 2 114 088 B1**
(45) Date of publication and mention of the grant of the patent: **20.02.2019**
(21) Application number: 09158698.2
(22) Date of filing: 24.04.2009
(51) Int. Cl.: H04R 23/00

(54) **Sound producing device**
Tonproduktionsvorrichtung
Dispositif de production sonore

(30) Priority: 18.06.2008 CN 200810067905; 18.06.2008 CN 200810067907; 18.06.2008 CN 200810067906; 18.06.2008 CN 200810067908; 04.06.2008 CN 200810067589; 04.06.2008 CN 200810067586; 04.06.2008 CN 200810067638; 28.04.2008 CN 200810066693
(43) Date of publication of application: 04.11.2009
(73) Proprietor: Tsing Hua University, Haidian District Beijing (CN); Hon Hai Precision Industry Co., Ltd., Tu-cheng City, Taipei Hsien (TW)
(72) Inventor: Jiang, Kai-Li, Haidian District Beijing (CN); Fan, Shou-Shan, Haidian District Beijing (CN); Chen, Zhuo, Haidian District Beijing (CN); Xiao, Lin, Haidian District Beijing (CN)
(74) Representative: CMS Cameron McKenna Nabarro Olswang LLP

(56) References cited:
- WO-A1-2007/052928
- CN-A- 1 821 048
- KR-B1- 100 761 548
- LEE I-YIN ET AL: "Photosensitization of nonlinear scattering and photoacoustic emission from single-walled carbon nanotubes", APPLIED PHYSICS LETTERS, AIP, AMERICAN INSTITUTE OF PHYSICS, MELVILLE, NY, US, vol. 92, no. 10, 13 March 2008 (2008-03-13), pages 103122-103122, XP012105908, ISSN: 0003-6951, DOI: 10.1063/1.2897302

## Description

The present disclosure relates to sound producing devices and, particularly, to a carbon nanotube based sound producing device.

Sound producing devices generally include a signal device and an sound wave generator. The signal device inputs signals to the sound wave generator such as a loudspeaker. Loudspeaker is an electro-acoustic transducer that converts electrical signals into sound.

There are different types of loudspeakers that can be categorized according by their working principle, such as electro-dynamic loudspeakers, electromagnetic loudspeakers, electrostatic loudspeakers and piezoelectric loudspeakers. However, the various types ultimately use mechanical vibration to produce sound waves, in other words they all achieve "electro-mechanical-acoustic" conversion. Among the various types, the electro-dynamic loudspeakers are most widely used.

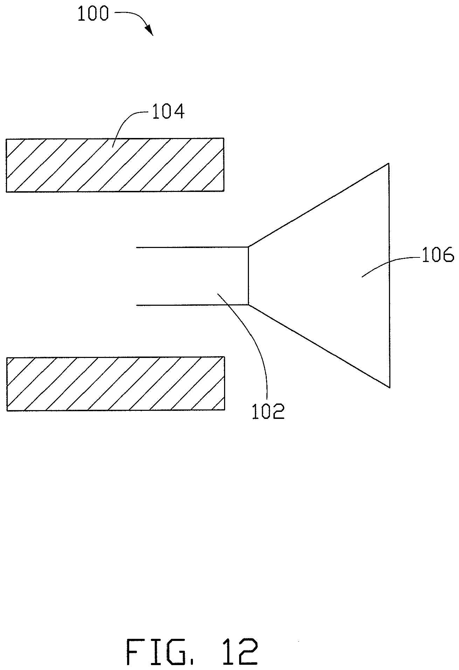

Referring to FIG. 12, the electro-dynamic loudspeaker 100, according to the prior art, typically includes a voice coil 102, a magnet 104 and a cone 106. The voice coil 102 is an electrical conductor, and is placed in the magnetic field of the magnet 104. By applying an electrical current to the voice coil 102, a mechanical vibration of the cone 106 is produced due to the interaction between the electromagnetic field produced by the voice coil 102 and the magnetic field of the magnets 104, thus producing sound waves. However, the structure of the electric-powered loudspeaker 100 is dependent on magnetic fields and often weighty magnets.

Thermoacoustic effect is a conversion between heat and acoustic signals. The thermoacoustic effect is distinct from the mechanism of the conventional loudspeaker, which the pressure waves are created by the mechanical movement of the diaphragm. When signals are inputted into a thermosound wave generator, heating is produced in the thermosound wave generator according to the variations of the signal and/or signal strength. Temperature waves, which are propagated into surrounding medium, are obtained. The temperature waves produce pressure waves in the surrounding medium, resulting in sound generation. Such an acoustic effect induced by temperature waves is commonly called "the thermoacoustic effect".

A thermophone based on the thermoacoustic effect was created by H.D.Arnold and I.B.Crandall (H.D.Arnold and I.B.Crandall, "The thermophone as a precision source of sound", Phys. Rev. 10, pp22-38 (1917)). They used platinum strip with a thickness of 7×10⁻⁵ cm as a thermosound wave generator. The heat capacity per unit area of the platinum strip with the thickness of 7×10⁻⁵ cm is 2×10⁻⁴ J/cm²·K. However, the thermophone adopting the platinum strip, listened to the open air, sounds extremely weak because the heat capacity per unit area of the platinum strip is too high.

Each of KR-100761548 and WO-A-2007/052928 discloses a sound producing device comprising a carbon nanotube structure which produces sound in response to a signal from a signal device. CN1821048A discloses a micron/nanometer thermoacoustic vibration exciter based on thermoacoustic conversion. Lee I-Yin et al in Applied Phys. Lett., AIP, Americal Institute of Physics, Mellville NY, vol 92, no 10, pp 103122 discusses photoacoustic emission from carbon nanotubes,

Carbon nanotubes (CNT) are a novel carbonaceous material and have received a great deal of interest since the early 1990s. Carbon nanotubes have interesting and potentially useful electrical and mechanical properties, and have been widely used in a plurality of fields.

What is needed, therefore, is to provide an sound producing device having a simple structure that is not dependent on magnetic fields.

Many aspects of the present sound producing device can be better understood with reference to the following drawings. The components in the drawings are not necessarily to scale, the emphasis instead being placed upon clearly illustrating the principles of the present sound producing device.
FIG. 1 is a schematic structural view of an sound producing device in accordance with a one embodiment.
FIG. 2 shows a Scanning Electron Microscope (SEM) image of an aligned carbon nanotube film.
FIG. 3 is a schematic structural view of a carbon nanotube segment.
FIG. 4 shows an SEM image of another carbon nanotube film with carbon nanotubes entangled with each other therein.
FIG. 5 shows an SEM image of a carbon nanotube film segment with the carbon nanotubes therein arranged along a preferred orientation.
FIG. 6 is a frequency response curve of one embodiment of the sound producing device.
FIG. 7 is a schematic structural view of an sound producing device in accordance with one embodiment.
FIG. 8 is a schematic structural view of an sound producing device with four coplanar electrodes.
FIG. 9 is a schematic structural view of an sound producing device employing a supporting element in accordance with one embodiment.
FIG. 10 is a schematic structural view of a three dimensional sound producing device in accordance with one embodiment.
FIG. 11 is a schematic structural view of an sound producing device in accordance with one embodiment.
FIG. 12 is a schematic structural view of a conventional loudspeaker according to the prior art.

Corresponding reference characters indicate corresponding parts throughout the several views. The exemplifications set out herein illustrate at least one exemplary embodiment of the present sound producing device, in at least one form, and such exemplifications are not to be construed as limiting the scope of the invention in any manner.

Reference will now be made to the drawings to describe, in detail, embodiments of the present sound producing device.

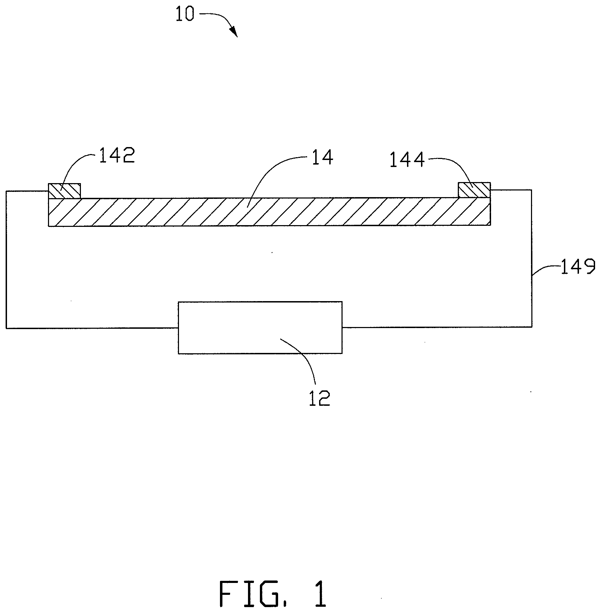

Referring to FIG. 1, an sound producing device 10 according to the first embodiment includes a signal device 12, an sound wave generator 14, a first electrode 142, and a second electrode 144. The first electrode 142 and the second electrode 144 are located apart from each other, and are electrically connected to the sound wave generator 14. In addition, the first electrode 142 and the second electrode 144 are electrically connected to the signal device 12. The first electrode 142 and the second electrode 144 input signals from the signal device 12 to the sound wave generator 14.

The sound wave generator 14 is a thermosound wave generator and includes a carbon nanotube structure. The carbon nanotube structure can have a many different structures and a large specific surface area. The heat capacity per unit area of the carbon nanotube structure can be less than 2×10⁻⁴ J/cm²·K. In one embodiment, the heat capacity per unit area of the carbon nanotube structure is less than or equal to 1.7×10⁻⁶ J/cm²·K. The carbon nanotube structure can include a plurality of carbon nanotubes uniformly distributed therein, and the carbon nanotubes therein can be combined by van der Waals attractive force therebetween. It is understood that the carbon nanotube structure must include metallic carbon nanotubes. The carbon nanotubes in the carbon nanotube structure can be arranged orderly or disorderly. The term 'disordered carbon nanotube structure' includes a structure where the carbon nanotubes are arranged along many different directions, arranged such that the number of carbon nanotubes arranged along each different direction can be almost the same (e.g. uniformly disordered); and/or entangled with each other. 'Ordered carbon nanotube structure' includes a structure where the carbon nanotubes are arranged in a consistently systematic manner, e.g., the carbon nanotubes are arranged approximately along a same direction and or have two or more sections within each of which the carbon nanotubes are arranged approximately along a same direction (different sections can have different directions). The carbon nanotubes in the carbon nanotube structure can be selected from a group consisting of single-walled, double-walled, and/or multi-walled carbon nanotubes. It is also understood that there may be many layers of ordered and/or disordered carbon nanotube films in the carbon nanotube structure.

The carbon nanotube structure may have a substantially planar structure. The thickness of the carbon nanotube structure may range from about 0.5 nanometers to about 1 millimeter. The smaller the specific surface area of the carbon nanotube structure, the greater the heat capacity will be per unit area. The larger the heat capacity per unit area, the smaller the sound pressure level of the sound producing device.

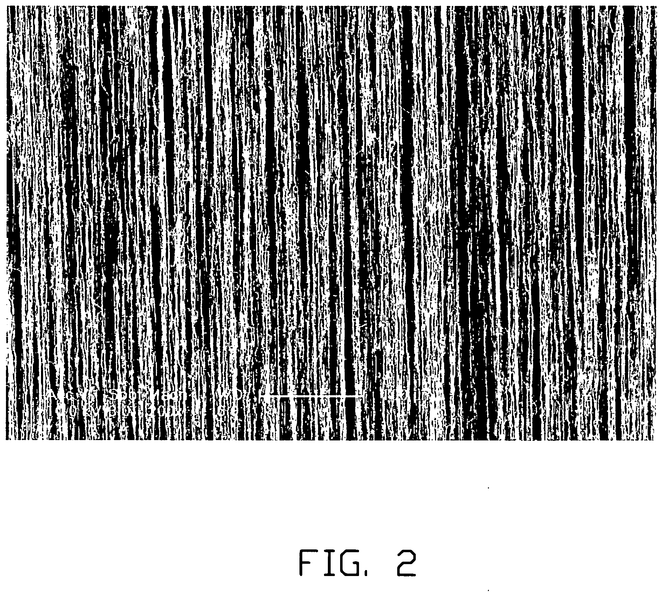

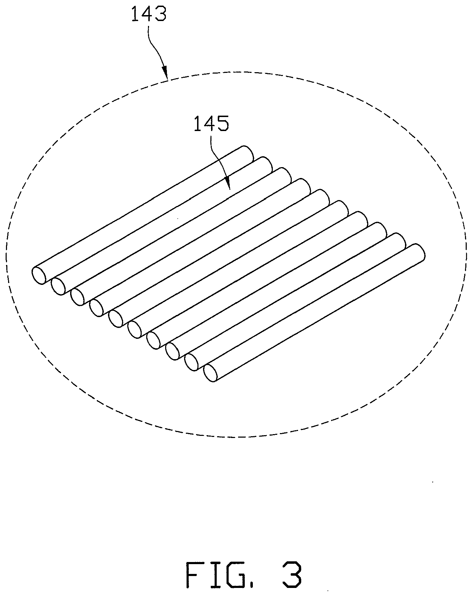

In one embodiment, the carbon nanotube structure can include at least one drawn carbon nanotube film. Examples of a drawn carbon nanotube film is taught by US patent 7,045,108 to Jiang et al., and WO 2007015710 to Zhang et al.. The drawn carbon nanotube film includes a plurality of successive and oriented carbon nanotubes joined end-to-end by van der Waals attractive force therebetween. The carbon nanotubes in the carbon nanotube film can be substantially aligned in a single direction. The drawn carbon nanotube film can be formed by drawing a film from a carbon nanotube array that is capable of being drawn. Referring to FIGS. 2 to 3, each drawn carbon nanotube film includes a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. As can be seen in FIG 2, some variations can occur in the drawn carbon nanotube film. The carbon nanotubes 145 in the drawn carbon nanotube film are also oriented along a preferred orientation. The carbon nanotube film also can be treated with an organic solvent. After that, the mechanical strength and toughness of the treated carbon nanotube film are increased and the coefficient of friction of the treated carbon nanotube films is reduced. The treated carbon nanotube film has a larger heat capacity per unit area and thus produces less of a thermoacustic effect. A thickness of the carbon nanotube film can range from about 0.5 nanometers to about 100 micrometers.

The carbon nanotube structure of the sound wave generator 14 also can include at least two stacked carbon nanotube films. In other embodiments, the carbon nanotube structure can include two or more coplanar carbon nanotube films. These coplanar carbon nanotube films can be stacked one upon another. Additionally, an angle can exist between the orientation of carbon nanotubes in adjacent films, stacked or adjacent. Adjacent carbon nanotube films can be combined only by the van der Waals attractive force therebetween. The number of the layers of the carbon nanotube films is not limited. However, a large enough specific surface area must be maintained. An angle between the aligned directions of the carbon nanotubes in the two adjacent carbon nanotube films can range from above 0 ° to about 90 °. When the angle between the aligned directions of the carbon nanotubes in adjacent carbon nanotube films is larger than 0 degrees, a microporous structure is defined by the carbon nanotubes in the sound wave generator 14. The carbon nanotube structure in an embodiment employing these films will have a plurality of micropores. Stacking the carbon nanotube films will add to the structural integrity of the carbon nanotube structure. In some embodiments, the carbon nanotube structure has a free standing structure and does not require the use of structural support.

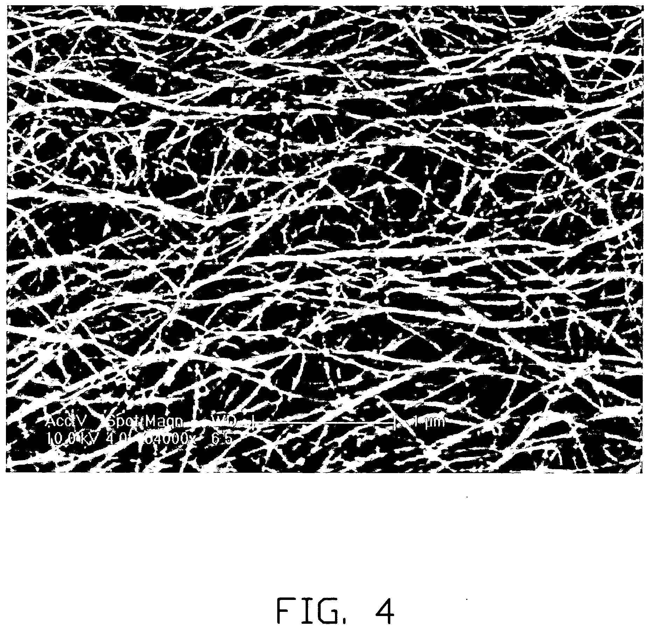

In another embodiment, the carbon nanotube structure includes a flocculated carbon nanotube film. Referring to FIG. 4, the flocculated carbon nanotube film can include a plurality of long, curved, disordered carbon nanotubes entangled with each other. Further, the flocculated carbon nanotube film can be isotropic. The carbon nanotubes can be substantially uniformly dispersed in the carbon nanotube film. The adjacent carbon nanotubes are acted upon by the van der Waals attractive force therebetween, thereby forming an entangled structure with micropores defined therein. It is understood that the flocculated carbon nanotube film is very porous. Sizes of the micropores can be less than 10 micrometers. The porous nature of the flocculated carbon nanotube film will increase specific surface area of the carbon nanotube structure. Further, due to the carbon nanotubes in the carbon nanotube structure being entangled with each other, the carbon nanotube structure employing the flocculated carbon nanotube film has excellent durability, and can be fashioned into desired shapes with a low risk to the integrity of carbon nanotube structure. Thus, the sound wave generator 14 may be formed into many shapes. The flocculated carbon nanotube film, in some embodiments, will not require the use of structural support due to the carbon nanotubes being entangled and adhered together by van der Waals attractive force therebetween. The thickness of the flocculated carbon nanotube film can range from about 0.5 nanometers to about 1 millimeter.

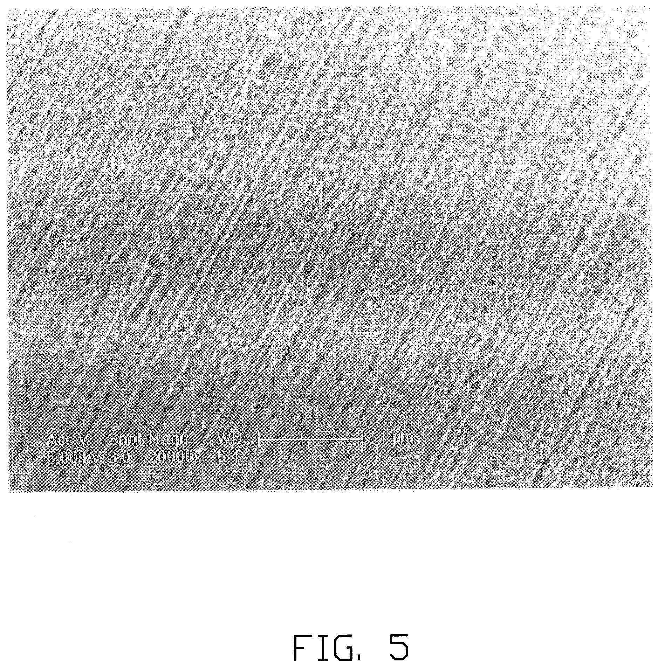

In another embodiment, the carbon nanotube structure includes a carbon nanotube film that comprises of one carbon nanotube film segment. Referring to FIG. 5, the carbon nanotube film segment includes a plurality of carbon nanotubes arranged along a preferred orientation. The carbon nanotube film segment is a carbon nanotube film that comprises one carbon nanotube segment. The carbon nanotube film segment includes a plurality of carbon nanotubes arranged along a same direction. The carbon nanotubes in the carbon nanotube film segment are substantially parallel to each other, have an almost equal length and are combined side by side via van der Waals attractive force therebetween. At least one carbon nanotube will span the entire length of the carbon nanotube film. Thus, the length of the carbon nanotube film is only limited by the length of the carbon nanotubes.

In some embodiments, the carbon nanotube film can be produced by growing a strip-shaped carbon nanotube array, and pushing the strip-shaped carbon nanotube array down along a direction perpendicular to length of the strip-shaped carbon nanotube array, and has a length ranged from about 20 micrometers to about 10 millimeters. The length of the carbon nanotube film is only limited by the length of the strip. The carbon nanotube film also can be formed by having a plurality of these strips lined up side by side and folding the carbon nanotubes grown thereon over such that there is overlap between the carbon nanotubes on adjacent strips.

In some embodiments, the carbon nanotube film can be produced by a method adopting a "kite-mechanism" and can have carbon nanotubes with a length of even above 10 centimeters. This is considered by some to be ultra-long carbon nanotubes. However, this method can be used to grow carbon nanotubes of many sizes. Specifically, the carbon nanotube film can be produced by providing a growing substrate with a catalyst layer located thereon; placing the growing substrate adjacent to the insulating substrate in a chamber; and heating the chamber to a growth temperature for carbon nanotubes under a protective gas, and introducing a carbon source gas along a gas flow direction, growing a plurality of carbon nanotubes on the insulating substrate. After introducing the carbon source gas into the chamber, the carbon nanotubes starts to grow under the effect of the catalyst. One end (e.g., the root) of the carbon nanotubes is fixed on the growing substrate, and the other end (e.g., the top/free end) of the carbon nanotubes grow continuously. The growing substrate is near an inlet of the introduced carbon source gas, the ultralong carbon nanotubes float above the insulating substrate with the roots of the ultralong carbon nanotubes still sticking on the growing substrate, as the carbon source gas is continuously introduced into the chamber. The length of the ultralong carbon nanotubes depends on the growth conditions. After growth has been stopped, the ultralong carbon nanotubes land on the insulating substrate. The carbon nanotubes are then separated from the growing substrate. This can be repeated many times so as to obtain many layers of carbon nanotube films on a single insulating substrate. The layers may have an angle from 0 to less than or equal to 90 degrees.

The carbon nanotube structure can further include at least two stacked or coplaner carbon nanotube film segments. Adjacent carbon nanotube film segments can be adhered together by van der Waals attractive force therebetween. An angle between the aligned directions of the carbon nanotubes in adjacent two carbon nanotube film segments ranges from 0 degrees to about 90 degrees. A thickness of a single carbon nanotube film segment can range from about 0.5 nanometers to about 100 micrometers.

Further, the carbon nanotube film and/or the entire carbon nanotube structure can be treated, such as by laser, to improve the light transmittance of the carbon nanotube film or the carbon nanotube structure. For example, the light transmittance of the untreated drawn carbon nanotube film ranges from about 70%-80%, and after laser treatment, the light transmittance of the untreated drawn carbon nanotube film can be improved to about 95%. The heat capacity per unit area of the carbon nanotube film and/or the carbon nanotube structure will increase after the laser treatment.

The carbon nanotube structure has a unique property which is that it is flexible. The carbon nanotube structure can be tailored or folded into many shapes and put onto a variety of rigid or flexible insulating surfaces, such as on a flag or a clothes. The flag having the carbon nanotube structure can act as the sound wave generator 14 as it dances in the wind. The clothes having the carbon nanotube structure can be a singing and speaking clothes, such as a jacket.

The carbon nanotube structure formed by at least one carbon nanotube drawn film has another striking property which is that the carbon nanotube structure is stretchable. The carbon nanotube structure can be put on two springs that serve also as the first and the second electrodes 142, 144. The carbon nanotubes in the carbon nanotube structure are perpendicular to the two springs. When the springs are uniformly stretched along a direction perpendicular to the arranged direction of the carbon nanotubes, the carbon nanotube structure is also stretched along the same direction. The carbon nanotube structure can be stretched to 300% of its original size, and can become more transparent than before stretching. In one embodiment, the carbon nanotube structure adopting one layer carbon nanotube drawn film is stretched to 200% of its original size, and the light transmittance of the carbon nanotube structure is about 80% before stretching and increased to about 90% after stretching. The sound intensity is almost unvaried during stretching. The stretching properties of the carbon nanotube structure may be widely used in stretchable consumer electronics and other devices.

In the embodiment shown in FIG. 1, the sound wave generator 14 includes a carbon nanotube structure comprising the drawn carbon nanotube film, and the drawn carbon nanotube film includes a plurality of carbon nanotubes arranged along a preferred direction. The length of the sound wave generator 14 is about 3 centimeters, the width thereof is about 3 centimeters, and the thickness thereof is about 50 nanometers. It can be understood that when the thickness of the sound wave generator 14 is small, for example, less than 10 micrometers, the sound wave generator 14 has greater transparency. Thus, it is possible to acquire a transparent sound producing device 10 by employing a transparent sound wave generator 14 comprising of a transparent carbon nanotube film in the sound producing device 10. The transparent sound producing device 10 can be located on the surface of a variety of display devices, such as a mobile phone or LCD. Moreover, the transparent sound wave generator 14 can even be placed on a surface of a painting. In addition, employing the transparent sound wave generator 14 can result in the saving of space by replacing typical speakers with a speaker anywhere, even in areas where elements are viewed. The sound wave generator of all embodiments can be relatively light weight when compared to traditional speakers. Thus the sound wave generator can be employed in a variety of situations that were not even available to traditional speakers.

The first electrode 142 and the second electrode 144 are made of conductive material. The shape of the first electrode 142 or the second electrode 144 is not limited and can be selected from a group consisting of lamellar, rod, wire, block and other shapes. A material of the first electrode 142 or the second electrode 144 can be selected from a group consisting of metals, conductive adhesives, carbon nanotubes, and indium tin oxides. In one embodiment, the first electrode 142 and the second electrode 144 are rod-shaped metal electrodes. The sound wave generator 14 is electrically connected to the first electrode 142 and the second electrode 144. The electrodes can provide structural support for the sound wave generator 14. Because, some of the carbon nanotube structures have large specific surface area, some sound wave generators 14 can be adhered directly to the first electrode 142 and the second electrode 144. This will result in a good electrical contact between the sound wave generator 14 and the electrodes 142, 144. The first electrode 142 and the second electrode 144 can be electrically connected to two ends of the signal device 12 by a conductive wire 149.

In other embodiment, a conductive adhesive layer (not shown) can be further provided between the first electrode 142 or the second electrode 144 and the sound wave generator 14. The conductive adhesive layer can be applied to the surface of the sound wave generator 14. The conductive adhesive layer can be used to provide electrical contact and more adhesion between the electrodes 142 or 144 and the sound wave generator 14. In one embodiment, the conductive adhesive layer is a layer of silver paste.

The signal device 12 can include the electrical signal devices, pulsating direct current signal devices, and/or electromagnetic wave signal devices (e.g., optical signal devices). The signals input from the signal device 12 to the sound wave generator 14 can be, for example, electromagnetic waves (e.g., optical signals), alternating electrical current, pulsating direct current or audio electrical signals. Energy of the signals can be absorbed and the resulting energy will then be radiated as heat. This heating causes detectable sound signals due to pressure variation in the surrounding (environmental) medium. It can be understood that the signals are different according to the specific application of the sound producing device 10. When the sound producing device 10 is applied to an earphone, the input signals are AC electrical signals or audio signals. When the sound producing device 10 is applied to a photoacoustic spectrum device, the input signals are optical signals. In the embodiment of FIG 1, the signal device 12 is an electric signal device, and the input signals are electric signals.

It also can be understood that the first electrode 142 and the second electrode 144 are optional according to different signal devices 12, e.g., when the signals are electromagnetic wave or light, the signal device 12 can input signals to the sound wave generator 14 without the first electrode 142 and the second electrode 144.

The carbon nanotube structure includes a plurality of carbon nanotubes and has a small heat capacity per unit area and can have a large area for causing the pressure oscillation in the surrounding medium by the temperature waves generated by the sound wave generator 14. In use, when signals, e.g., electrical signals, with variations in the application of the signal and/or strength are input applied to the carbon nanotube structure of the sound wave generator 14, heating is produced in the carbon nanotube structure according to the variations of the signal and/or signal strength. Temperature waves, which are propagated into surrounding medium, are obtained. The temperature waves produce pressure waves in the surrounding medium, resulting in sound generation. In this process, it is the thermal expansion and contraction of the medium in the vicinity of the sound wave generator 14 that produces sound. This is distinct from the mechanism of the conventional loudspeaker, which the pressure waves are created by the mechanical movement of the diaphragm. When the input signals are electrical signals, the operating principle of the present sound producing device 10 is an "electrical-thermal-sound" conversion. When the input signals are optical signals, the operation principle of the present sound producing device 10 is an "optical-thermal-sound" conversion. Energy of the optical signals can be absorbed by the sound wave generator 14 and the resulting energy will then be radiated as heat. This heat causes detectable sound signals due to pressure variation in the surrounding (environmental) medium.

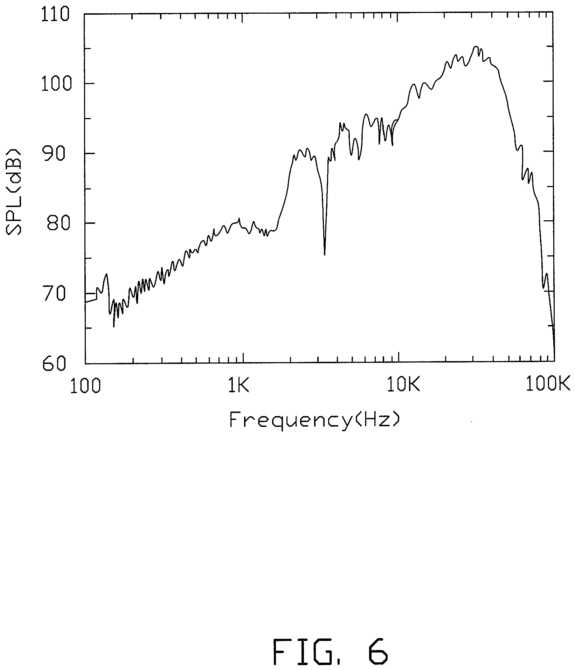

FIG. 6 shows a frequency response curve of the sound producing device 10 according to the an embodiment when a single carbon nanotube film having a length and width of 30 millimeters, and the carbon nanotubes arranged along a direction extending from the first electrode 142 to the second electrode 144 is used as the carbon nanotube structure and serves as the sound wave generator 14. As shown in FIG. 6, the sound producing device 10 of the present embodiment has a wide frequency response range and a high sound pressure level. The sound pressure level of the sound waves generated by the sound producing device 10 can be greater than 50 dB. The sound pressure level generated by the sound producing device 10 reaches up to 100 dB. The frequency response range of one embodiment sound producing device 10 can be from about 1 Hz to about 100 KHz with power input of 4.5 W. The total harmonic distortion of the sound producing device 10 is extremely small, e.g., less than 3% in a range from about 500 Hz to 40 KHz. In one embodiment, the carbon nanotube structure includes five carbon nanotube wire-like structures, a distance between adjacent two carbon nanotube wire-like structures is 1 centimeter, and a diameter of the carbon nanotube wire-like structures is 50 micrometers, when an alternating electrical signals with 50 voltages is input to the carbon nanotube structure, the intensity of the sound waves generated by the sound producing device 10 can be greater than about 50 dB SPL, and less than about 95 dB SPL. The sound wave level generated by the sound producing device 10 reaches up to 100 dB. The frequency response range of one embodiment sound producing device 10 can be from about 100 Hz to about 100 KHz with power input of 4.5 W.

Further, since the carbon nanotube structure has an excellent mechanical strength and toughness, the carbon nanotube structure can be tailored to any desirable shape and size, allowing an sound producing device 10 of most any desired shape and size to be achieved. The sound producing device 10 can be applied to a variety of other devices, such as sound systems, mobile phones, MP3s, MP4s, TVs, computers, and so on.

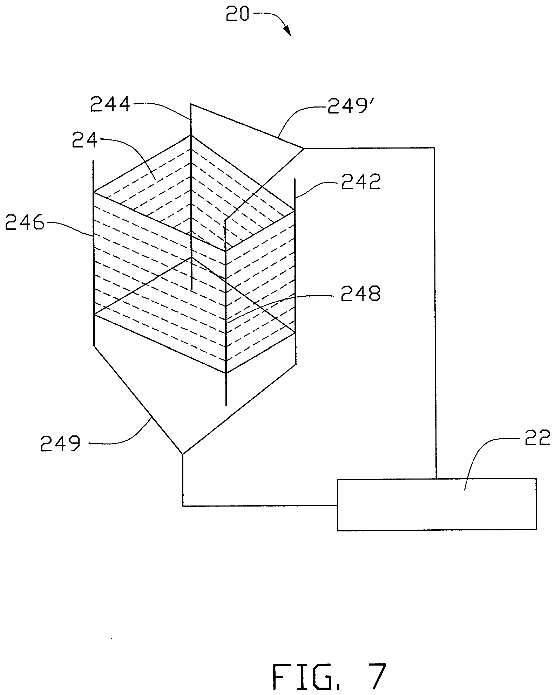

Referring to FIG. 7, an sound producing device 20, according to another embodiment, includes a signal device 22, an sound wave generator 24, a first electrode 242, a second electrode 244, a third electrode 246, and a fourth electrode 248.

The compositions, features and functions of the sound producing device 20 in the embodiment shown in FIG. 7 are similar to the sound producing device 10 in the embodiment shown in FIG 1. The difference is that, the present sound producing device 20 includes four electrodes, the first electrode 242, the second electrode 244, the third electrode 246, and the fourth electrode 248. The first electrode 242, the second electrode 244, the third electrode 246, and the fourth electrode 248 are all rod-like metal electrodes, located apart from each other. The first electrode 242, the second electrode 244, the third electrode 246, and the fourth electrode 248 are located in different planes. The sound wave generator 24 surrounds the first electrode 242, the second electrode 244, the third electrode 246, and the fourth electrode 248. The sound wave generator 24 is electrically connected to the first electrode 242, the second electrode 244, the third electrode 246, and the fourth electrode 248. In the present embodiment, the first electrode 242 and the third electrode 246 are electrically connected in parallel to one terminal of the signal device 22 by a first conductive wire 249, and the second electrode 244 and the fourth electrode 248 are electrically connected in parallel to the other terminal of the signal device 22 by a second conductive wire 249'. The parallel connections in the sound wave generator 24 provide for lower resistance, thus input voltage required to the sound producing device 20, can be lowered. The sound wave generator 24, according to the present embodiment, can radiate thermal energy out to surrounding medium, and thus create sound. It can be understood that the first electrode 242, the second electrode 244, the third electrode 246, and the fourth electrode 248 also can be configured to support the sound wave generator 24.

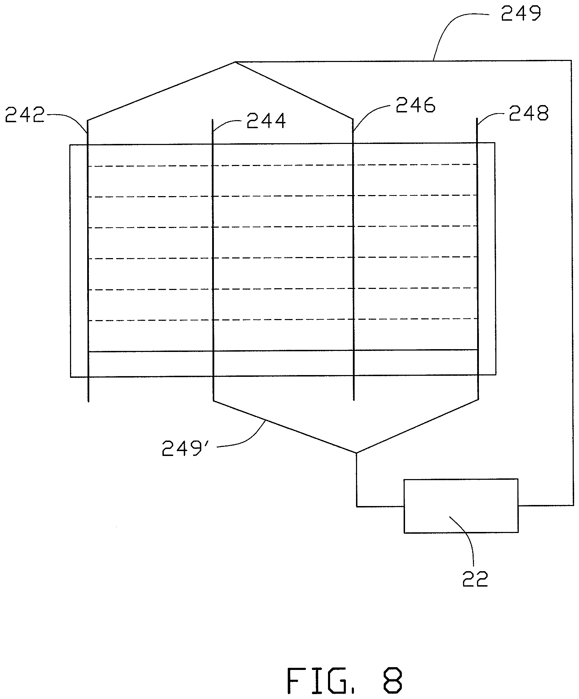

It can be understood that the first electrode 242, the second electrode 244, the third electrode 246, and the fourth electrode 248 also can be coplanar, as can be seen in FIG. 8. Further, a plurality of electrodes, such as more than four electrodes, can be employed in the sound producing device 20 according to needs following the same pattern of parallel connections as when four electrodes are employed.

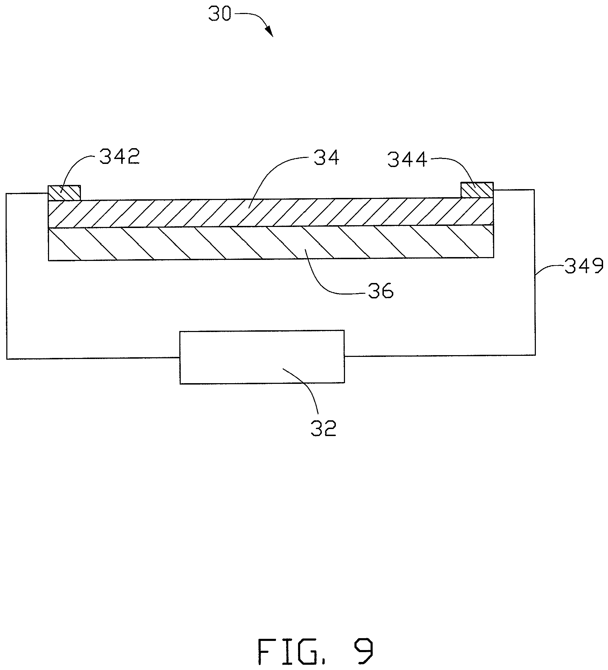

Referring to FIG. 9, an sound producing device 30 according to another embodiment includes a signal device 32, an sound wave generator 34, a supporting element 36, a first electrode 342, and a second electrode 344.

The compositions, features and functions of the sound producing device 30 in the embodiment shown in FIG. 9 are similar to the sound producing device 10 in the embodiment shown in FIG 1. The difference is that the present sound producing device 30 includes the supporting element 36, and the sound wave generator 34 is located on a surface of the supporting element 36.

The supporting element 36 is configured for supporting the sound wave generator 34. A shape of the supporting element 36 is not limited, nor is the shape of the sound wave generator 34. The supporting element 36 can have a planar and/or a curved surface. The supporting element 36 can also have a surface where the sound wave generator 34 is can be securely located, exposed or hidden. The supporting element 36 may be, for example, a wall, a desk, a screen, or a display (electronic or not). The sound wave generator 34 can be located directly on and in contact with the surface of the supporting element 36.

The material of the supporting element 36 is not limited, and can be a rigid material, such as diamond, glass or quartz, or a flexible material, such as plastic, resin, fabric. The supporting element 36 can have a good thermal insulating property, thereby preventing the supporting element 36 from absorbing the heat generated by the sound wave generator 34. In addition, the supporting element 36 can have a relatively rough surface, thereby the sound wave generator 34 can have a greater contact area with the surrounding medium, and the acoustic performance of the sound producing device 30 can be improved to a certain extent.

Since the carbon nanotubes structure has a large specific surface area, the sound wave generator 34 can be adhered directly on the supporting element 36 in good contact.

An adhesive layer (not shown) can be further provided between the sound wave generator 34 and the supporting element 36. The adhesive layer can be located on the surface of the sound wave generator 34. The adhesive layer can provide a better bond between the sound wave generator 34 and the supporting element 36. In one embodiment, the adhesive layer is a layer of silver paste. A thermally insulative adhesive can also be selected as the adhesive layer

Electrodes can be connected on any surface of the carbon nanotube structure. The first electrode 342 and the second electrode 344 can be on the same surface of the sound wave generator 34 or on two different surfaces of the sound wave generator 34. It is understood that more than two electrodes can be on surface(s) of the sound wave generator 34, and be connected in the manner described above.

In addition, it can be understood that the first electrode 342 and the second electrode 344 are optional when the sound wave generator 34 is located on the surface of the supporting element 36. The signal device 32 can be connected to the sound wave generator 34 directly via a conductive wire. Any way that can electrically connect the signal device 32 to the sound wave generator 34 and thereby input signal to the sound wave generator 34 can be adopted.

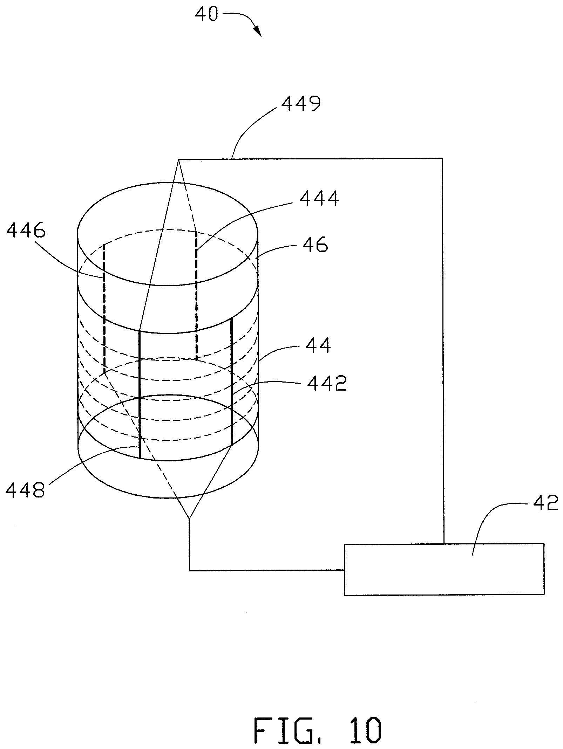

Referring to FIG. 10, an sound producing device 40 according to another embodiment includes a signal device 42, an sound wave generator 44, a supporting element 46, a first electrode 442, a second electrode 444, a third electrode 446, and a fourth electrode 448.

The compositions, features and functions of the sound producing device 40 in the embodiment shown in FIG. 10 are similar to the sound producing device 30 in the embodiment shown in FIG. 9. The difference is that the sound wave generator 44 as shown in FIG. 13 surrounds the supporting element 46. A shape of the supporting element 46 is not limited, and can be most any three or two dimensional structure, such as a cube, a cone, or a cylinder. In one embodiment, the supporting element 46 is cylinder-shaped. The first electrode 442, the second electrode 444, the third electrode 446, and the fourth electrode 448 are separately located on a surface of the sound wave generator 44 and electrically connected to the sound wave generator 44. Connections between the first electrode 442, the second electrode 444, the third electrode 446, the fourth electrode 448 and the signal device 42 can be the same as described in the embodiment as shown in FIG. 7. It can be understood that a number of electrodes other than four can be located on the sound wave generator 44.

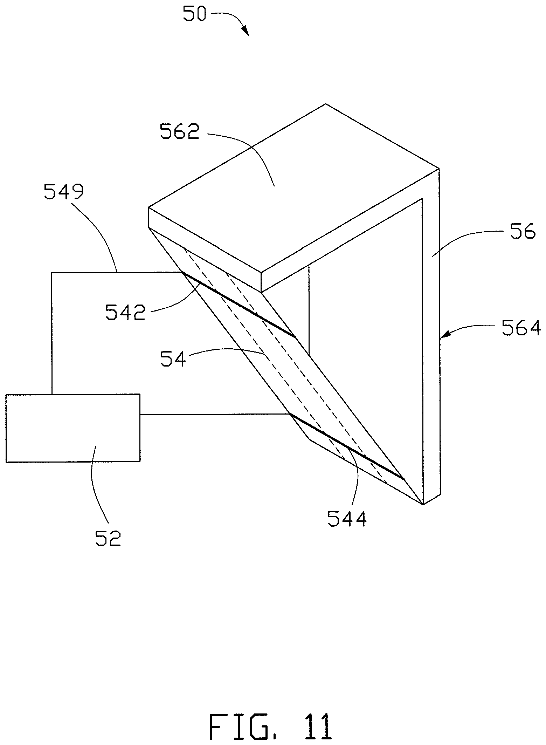

Referring to FIG. 11, an sound producing device 50 according to another embodiment includes a signal device 52, an sound wave generator 54, a supporting element 56, a first electrode 542, and a second electrode 544.

The compositions, features, and functions of the sound producing device 50 in the embodiment shown in FIG. 11 are similar to the sound producing device 30 as shown in FIG. 9. The difference is that a portion of the sound wave generator 54 is located on a surface of the supporting element 56 and a sound collection space is defined by the sound wave generator 54 and the supporting element 56. The sound collection space can be a closed space or an open space. Specifically, the supporting element 56 can have an L-shaped structure, U-shaped structure or any cavity structure with an opening. The sound wave generator 54 can cover the opening of the supporting element 56 to form a Helmholtz resonator. It can be understood that the sound producing device50 also can have two or more supporting elements 56, the two or more supporting elements 56 are used to collectively suspend the sound wave generator 54. A material of the supporting element 56 can be selected from suitable materials including wood, plastics, metal and glass. In the present embodiment, the supporting element 56 has an L-shaped structure. Referring to FIG. 11, the supporting element 56 includes a first portion 562 connected at right angles to a second portion 564 to form the L-shaped structure of the supporting element 56. The sound wave generator 54 extends from the distal end of the first portion 562 to the distal end of the second portion 564, resulting in the sound wave generator 54 thereby defining a sound collection space in cooperation with the L-shaped structure of the supporting element 56. The first electrode 542 and the second electrode 544 are connected to a surface of the sound wave generator 54. The first electrode 542 and the second electrode 544 are electrically connected to the signal device 52. Sound waves generated by the sound wave generator 54 can be reflected by the inside wall of the supporting element 56, thereby enhancing acoustic performance of the sound producing device50.

Finally, it is to be understood that the above-described embodiments are intended to illustrate rather than limit the invention.

## Claims

1. A sound producing device (10, 20, 30, 40, 50) based on the principle of electrical-thermal-sound comprising:
a signal device (12, 22, 32, 42, 52); and
a sound wave generator (14, 24, 34, 44, 54) electrically connected to the signal device,
wherein the sound wave generator comprises a carbon nanotube structure **characterised in that** the carbon nanotube structure is designed to produce sound in response to receiving an electrical signal from the signal device by converting the electrical signal to heat which is propagated into the surrounding medium to produce pressure waves in the surrounding medium.

2. A sound producing device (10, 20, 30, 40, 50) as claimed in claim 1, wherein the carbon nanotube structure comprises a plurality of carbon nanotubes uniformly distributed therein, and the carbon nanotubes are combined by van der Waals attractive force therebetween.

3. A sound producing device (10, 20, 30, 40, 50) as claimed in either of claims 1 or 2, wherein the carbon nanotube structure has a substantially planar structure and a thickness of the carbon nanotube structure ranges from about 0.5 nanometers to about 1 millimeter.

4. A sound producing device (10, 20, 30, 40, 50) as claimed in any of claims 1 to 3, wherein the carbon nanotube structure comprises at least one carbon nanotube film, wherein the carbon nanotube film comprises a plurality of carbon nanotubes joined end to end and substantially oriented along a same direction.

5. A sound producing device (10, 20, 30, 40, 50) as claimed in any of claims 1 to 3, wherein the carbon nanotube structure comprises at least one carbon nanotube film, wherein the carbon nanotube film comprises a plurality of carbon nanotubes substantially parallel to each other and having substantially the same lengths and combined side by side by van der Waals attractive force therebetween, wherein a length of the carbon nanotube film is equal to a length of each carbon nanotube.

6. A sound producing device (10, 20, 30, 40, 50) as claimed in either of claims 4 or 5, wherein the carbon nanotube structure comprises two or more coplanar or stacked carbon nanotube films.

7. A sound producing device (10, 20, 30, 40, 50) as claimed in any of claims 1 to 3, wherein the carbon nanotube structure comprises a carbon nanotube film, wherein the carbon nanotube film comprises a plurality of carbon nanotubes entangled with each other and having two or more sections within each of which the carbon nanotubes are arranged approximately along a same direction.

8. A sound producing device (10, 20, 30, 40, 50) as claimed in any of claims 1 to 7 further comprising at least two electrodes (142, 144; 242, 244, 246, 248; 342, 344; 442, 444, 446, 448; 542, 544) located apart from each other, wherein the at least two electrodes are electrically connected to the sound wave generator (14, 24, 34, 44, 54) and the signal device (12, 22, 32, 42, 52), wherein the sound wave generator receives signals from the signal device via the at least two electrodes.

9. A sound producing device (20, 40) as claimed in any of claims 1 to 7 further comprising a plurality of electrodes (242, 244, 246, 248; 442, 444, 446, 448), wherein any adjacent two electrodes are electrically connected to different terminals of the signal device (22, 42).

10. A sound producing device (10, 20, 30, 40, 50) as claimed in any of claims 1 to 9, wherein the electrical signals from the signal device (12, 22, 32, 42, 52) to the sound wave generator (14, 24, 34, 44, 54) are selected from a group consisting of alternating electrical current, pulsating direct current and combinations thereof.

11. A sound producing device (30, 40, 50) as claimed in any of claims 1 to 10, wherein at least part of the sound wave generator (34, 44, 54) is supported by at least one supporting element (36, 46, 56).

12. A sound producing device (50) as claimed in claim 11, wherein at least part of the sound wave generator (54) is suspended via the at least one supporting element (56).

13. A sound producing device (50) as claimed in claim 12, wherein the supporting element (56) has an L-shaped structure, U-shaped structure or a cavity structure with an opening, and a sound collection space is defined by the supporting element and the sound wave generator (54).

14. A sound producing device (30) as claimed in claim 11, wherein the sound wave generator (34) is located on a surface of the supporting element (36).

15. A sound producing device (40) as claimed in claim 11, wherein the sound wave generator (44) has a three dimensional structure and surrounds the supporting element (46).

16. A sound producing device (10, 20, 30, 40, 50) as claimed in any of claims 1 to 15, wherein the heat capacity per unit area of the carbon nanotube structure is less than 2×10⁻⁴ J/cm²·K.

## Patentansprüche

1. Schallproduzierende Einrichtung (10, 20, 30, 40, 50) basierend auf dem Prinzip von elektrisch-thermischem Schall, umfassend:
eine Signaleinrichtung (12, 22, 32, 42, 52); und
einen Schallwellengenerator (14, 24, 34, 44, 54), der elektrisch mit der Signaleinrichtung verbunden ist, wobei der Schallwellengenerator eine Kohlenstoff-Nanoröhren-Struktur umfasst, **dadurch gekennzeichnet, dass** die Kohlenstoff-Nanoröhren-Struktur so entworfen ist, dass sie Schall in Ansprechen auf ein Empfangen eines elektrischen Signals von der Signaleinrichtung erzeugt, indem sie das elektrische Signal in Wärme umwandelt, die sich in das umgebende Medium hinein ausbreitet, um Druckwellen im umgebenden Medium zu erzeugen.

2. Schallproduzierende Einrichtung (10, 20, 30, 40, 50) nach Anspruch 1, wobei die Kohlenstoff-Nanoröhren-Struktur eine Mehrzahl von Kohlenstoff-Nanoröhren umfasst, die gleichmäßig darin verteilt sind, und wobei die Kohlenstoff-Nanoröhren durch vander-Waals-Anziehungskraft zwischen ihnen kombiniert sind.

3. Schallproduzierende Einrichtung (10, 20, 30, 40, 50) nach einem der Ansprüche 1 oder 2, wobei die Kohlenstoff-Nanoröhren-Struktur eine im Wesentlichen ebene Struktur hat und eine Dicke der Kohlenstoff-Nanoröhren-Struktur von ungefähr 0,5 nm bis ungefähr 1 mm reicht.

4. Schallproduzierende Einrichtung (10, 20, 30, 40, 50) nach einem der Ansprüche 1 bis 3, wobei die Kohlenstoff-Nanoröhren-Struktur mindestens eine Kohlenstoff-Nanoröhren-Schicht umfasst, wobei die Kohlenstoff-Nanoröhren-Schicht eine Mehrzahl von Kohlenstoff-Nanoröhren umfasst, die Ende an Ende zusammengefügt sind und im Wesentlichen entlang einer gleichen Richtung ausgerichtet sind.

5. Schallproduzierende Einrichtung (10, 20, 30, 40, 50) nach einem der Ansprüche 1 bis 3, wobei die Kohlenstoff-Nanoröhren-Struktur mindestens eine Kohlenstoff-Nanoröhren-Schicht umfasst, wobei die Kohlenstoff-Nanoröhren-Schicht eine Mehrzahl von Kohlenstoff-Nanoröhren umfasst, die im Wesentlichen parallel zueinander sind und im Wesentlichen die gleichen Längen haben und Seite an Seite durch van-der-Waals-Anziehungskraft dazwischen kombiniert sind, wobei eine Länge der Kohlenstoff-Nanoröhren-Schicht gleich einer Länge von jeder Kohlenstoff-Nanoröhre ist.

6. Schallproduzierende Einrichtung (10, 20, 30, 40, 50) nach einem der Ansprüche 4 oder 5, wobei die Kohlenstoff-Nanoröhren-Struktur zwei oder mehr koplanare oder gestapelte Kohlenstoff-Nanoröhren-Schichten umfasst.

7. Schallproduzierende Einrichtung (10, 20, 30, 40, 50) nach einem der Ansprüche 1 bis 3, wobei die Kohlenstoff-Nanoröhren-Struktur eine Kohlenstoff-Nanoröhren-Schicht umfasst, wobei die Kohlenstoff-Nanoröhren-Schicht eine Mehrzahl von Kohlenstoff-Nanoröhren umfasst, die miteinander verschlungen sind und zwei oder mehr Schnitte hat, wobei innerhalb jeder davon die Kohlenstoff-Nanoröhren ungefähr entlang einer gleichen Richtung angeordnet sind.

8. Schallproduzierende Einrichtung (10, 20, 30, 40, 50) nach einem der Ansprüche 1 bis 7, die weiter mindestens zwei Elektroden (142,144; 242, 244, 246, 248; 342, 344; 442, 444, 446, 448; 542, 544) umfasst, die sich voneinander entfernt befinden, wobei die mindestens zwei Elektroden elektrisch mit dem Schallwellengenerator (14, 24, 34, 44, 54) und der Signaleinrichtung (12, 22, 32, 42, 52) verbunden sind, wobei der Schallwellengenerator Signale von der Signaleinrichtung über die mindestens zwei Elektroden empfängt.

9. Schallproduzierende Einrichtung (20, 40) nach einem der Ansprüche 1 bis 7, die weiter eine Mehrzahl von Elektroden (242, 244, 246, 248; 442, 444, 446, 448) umfasst, wobei irgendwelche angrenzenden zwei Elektroden elektrisch mit unterschiedlichen Anschlüssen der Signaleinrichtung (22, 42) verbunden sind.

10. Schallproduzierende Einrichtung (10, 20, 30, 40, 50) nach einem der Ansprüche 1 bis 9, wobei die elektrischen Signale von der Signaleinrichtung (12, 22, 32, 42, 52) an den Schallwellengenerator (14, 24, 34, 44, 54) aus eine Gruppe ausgewählt sind, die aus einem elektrischen Wechselstrom, einem pulsierenden Gleichstrom und Kombinationen daraus besteht.

11. Schallproduzierende Einrichtung (30, 40, 50), nach einem der Ansprüche 1 bis 10, wobei zumindest ein Teil des Schallwellengenerators (34, 44, 54) von mindestens einem Halteelement (36, 46, 56) gehalten wird.

12. Schallproduzierende Einrichtung (50) nach Anspruch 11, wobei zumindest ein Teil des Schallwellengenerators (54) von dem mindestens einem Halteelement (56) abgehängt ist.

13. Schallproduzierende Einrichtung (50) nach Anspruch 12, wobei das Halteelement (56) eine L-förmige Struktur, U-förmige Struktur oder eine Hohlraumstruktur mit einer Öffnung hat, und ein Schallsammel-Zwischenraum von dem Halteelement und dem Schallwellengenerator (54) definiert wird.

14. Schallproduzierende Einrichtung (30) nach Anspruch 11, wobei sich der Schallwellengenerator (34) auf einer Oberfläche des Halteelements (36) befindet.

15. Schallproduzierende Einrichtung (40) nach Anspruch 11, wobei der Schallwellengenerator (44) eine dreidimensionale Struktur hat und das Halteelement (46) umgibt.

16. Schallproduzierende Einrichtung (10, 20, 30, 40, 50) nach einem der Ansprüche 1 bis 15, wobei die Wärmekapazität pro Flächeneinheit der Kohlenstoff-Nanoröhren-Struktur kleiner ist als 2 × 10 ⁻⁴ J/cm²·K.

## Revendications

1. Dispositif producteur de son (10, 20, 30, 40, 50) basé sur le principe d'un son électro-thermique comprenant :
un dispositif d'émission de signaux (12, 22, 32, 42, 52) ; et
un générateur d'ondes sonores (14, 24, 34, 44, 54) relié électriquement au dispositif d'émission de signaux, dans lequel le générateur d'ondes sonores comprend une structure de nanotubes de carbone, **caractérisé en ce que** la structure de nanotubes de carbone est conçue pour produire un son en réponse à la réception d'un signal électrique provenant du dispositif d'émission de signaux en convertissant le signal électrique en chaleur qui se propage dans le milieu environnant pour produire des ondes de pression dans le milieu environnant.

2. Dispositif producteur de son (10, 20, 30, 40, 50) selon la revendication 1, dans lequel la structure de nanotubes de carbone comprend une pluralité de nanotubes de carbone uniformément répartis dans celui-ci, et les nanotubes de carbone sont combinés par une force d'attraction de Van der Waals entre eux.

3. Dispositif producteur de son (10, 20, 30, 40, 50) selon l'une des revendications 1 ou 2, dans lequel la structure de nanotubes de carbone a une structure sensiblement plane et une épaisseur de la structure de nanotubes de carbone est d'environ 0,5 nanomètre à environ 1 millimètre.

4. Dispositif producteur de son (10, 20, 30, 40, 50) selon l'une quelconque des revendications 1 à 3, dans lequel la structure de nanotubes de carbone comprend au moins un film de nanotubes de carbone, dans lequel le film de nanotubes de carbone comprend une pluralité de nanotubes joints bout à bout et sensiblement orientés dans une même direction.

5. Dispositif producteur de son (10, 20, 30, 40, 50) selon l'une quelconque des revendications 1 à 3, dans lequel la structure de nanotubes de carbone comprend au moins un film de nanotubes de carbone, dans lequel le film de nanotubes de carbone comprend une pluralité de nanotubes sensiblement parallèles les uns aux autres et ayant sensiblement les mêmes longueurs et combinés côte à côte par une force d'attraction de Van der Waals entre eux, dans lequel une longueur du film de nanotubes de carbone est égale à une longueur de chaque nanotube de carbone.

6. Dispositif producteur de son (10, 20, 30, 40, 50) selon l'une quelconque des revendications 4 ou 5, dans lequel la structure de nanotubes de carbone comprend deux films ou plus de nanotubes de carbone coplanaires ou empilés.

7. Dispositif producteur de son (10, 20, 30, 40, 50) selon l'une quelconque des revendications 1 à 3, dans lequel la structure de nanotubes de carbone comprend un film de nanotubes de carbone, dans lequel le film de nanotubes de carbone comprend une pluralité de nanotubes de carbone enchevêtrés les uns avec les autres et ayant deux sections ou plus dans chacune desquelles les nanotubes de carbone sont disposés approximativement dans une même direction.

8. Dispositif producteur de son (10, 20, 30, 40, 50) selon l'une quelconque des revendications 1 à 7, comprenant en outre au moins deux électrodes (142, 144 ; 242, 244, 246, 248 ; 342, 344 ; 442 , 444, 446, 448 ; 542, 544) disposée à distance l'une de l'autre, dans lequel les au moins deux électrodes sont reliées électriquement au générateur d'ondes sonores (14, 24, 34, 44, 54) et au dispositif d'émission de signaux (12, 22 , 32, 42, 52), dans lequel le générateur d'ondes sonores reçoit des signaux du dispositif d'émission de signaux via les au moins deux électrodes.

9. Dispositif producteur de son (20, 40) selon l'une quelconque des revendications 1 à 7 comprenant en outre une pluralité d'électrodes (242, 244, 246, 248 ; 442, 444, 446, 448), dans lequel tout couple d'électrodes adjacentes est relié électriquement à différentes bornes du dispositif d'émission de signaux (22, 42).

10. Dispositif producteur de son (10, 20, 30, 40, 50) selon l'une quelconque des revendications 1 à 9, dans lequel les signaux électriques du dispositif d'émission de signaux (12, 22, 32, 42, 52) vers le générateur d'ondes sonores (14, 24, 34, 44, 54) sont choisis dans un groupe constitué par un courant électrique alternatif, un courant continu pulsé et par des combinaisons de ceux-ci.

11. Dispositif producteur de son (30, 40, 50) selon l'une quelconque des revendications 1 à 10, dans lequel au moins une partie du générateur d'ondes sonores (34, 44, 54) est supportée par au moins un élément de support (36, 46, 56).

12. Dispositif producteur de son (50) selon la revendication 11, dans lequel au moins une partie du générateur d'ondes sonores (54) est suspendue via l'au moins un élément de support (56).

13. Dispositif producteur de son (50) selon la revendication 12, dans lequel l'élément de support (56) a une structure en forme de L, une structure en forme de U ou une structure de cavité avec une ouverture, et un espace de collecte de son est défini par le l'élément de support et le générateur d'ondes sonores (54).

14. Dispositif producteur de son (30) selon la revendication 11, dans lequel le générateur d'ondes sonores (34) est situé sur une surface de l'élément de support (36).

15. Dispositif producteur de son (40) selon la revendication 11, dans lequel le générateur d'ondes sonores (44) a une structure tridimensionnelle et entoure l'élément de support (46).

16. Dispositif producteur de son (10, 20, 30, 40, 50) selon l'une quelconque des revendications 1 à 15, dans lequel la capacité calorifique par unité de surface de la structure de nanotubes de carbone est inférieure à 2x10⁻⁴ J/cm²·K.
